# EUROPEAN PATENT APPLICATION

(11) **EP 2 117 250 A1**
(43) Date of publication of application: **11.11.2009**
(21) Application number: 07817369.7
(22) Date of filing: 13.12.2007
(51) Int. Cl.: H04Q 7/38

(54) **METHOD FOR HANDOVERING A TERMINAL TO A MACROCELL, SYSTEM, TERMINAL, AP AND GATEWAY THEREOF**

(30) Priority: 17.01.2007 CN 200710002429
(71) Applicant: Huawei Technologies Co., Ltd., Longgang District, Shenzhen Guangdong 518129 (CN)
(72) Inventor: XIE, Mingjiang, Shenzhen Guangdong 518129 (CN); QIU, Yong, Shenzhen Guangdong 518129 (CN); WANG, Zongjie, Shenzhen Guangdong 518129 (CN)
(74) Representative: Pfenning, Meinig & Partner GbR
(86) International application number: PCT/CN2007/071227
(87) International publication number: WO 2008/089640

(57) **Abstract**

A method for handovering a terminal to a macrocell and a system, a terminal, an AP, a gateway thereof are disclosed. The method for handovering the terminal to the macrocell mainly includes: determining the terminal in a frequently handovering state or in a fast moving state, handovering the terminal to the macrocell based on the determined frequently handovering state or the fast moving state, and predetermined criterions.

## Description

The present application claims the benefit of CN Application No. 200710002429.4 filed on January 17, 2007, titled "METHOD, SYSTEM, TERMINAL, ACCESS NODE AND GATEWAY FOR HANDING OVER TERMINAL TO MACROCELL", which is incorporated herein by reference in its entirety.

### Field of the Invention

The present invention relates to the field of wireless communication technology, particularly, to a method, a system, a terminal, an access node and a gateway for handing over a terminal to a macrocell.

### Background of the Invention

With the further development of the wireless communication, more and more people use the wireless terminal. However, when a user moves fast, for example, when the user is in a car which moves fast or in cell edges of a plurality of cells, the user terminal may implement handovers among different cells frequently. Thus, the system responds to each handover of the terminal and the system loads are increased. In order to decrease unnecessary handovers and lower the system loads, a macrocell is configured in a network. The macrocell is a cell which has a larger cell coverage range than normal and generally covers a plurality of normal cells. When the macrocell is configured, the user in the car which moves fast use the macrocell and other users use the normal cell. The normal cell may be classified into micro-cell and micromicro-cell. A footer or a user who moves slowly uses the microcell and an intracity user uses the micromicro-cell.

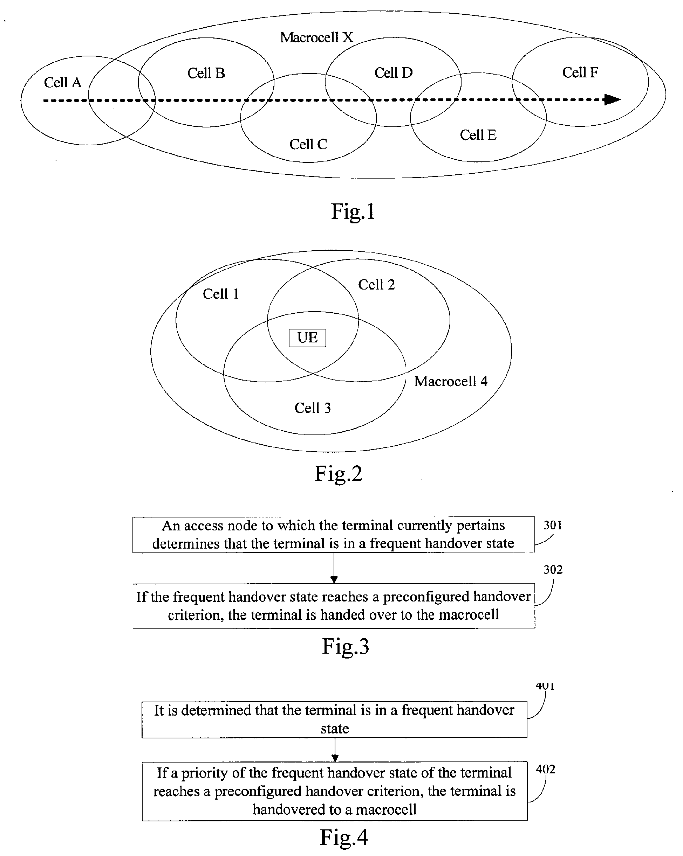

The reason causing a frequent handover may include the following two reasons. The first reason is fast moving. As shown in Figure 1, a UE moves to cell F from cell A fast through cells B, C, D and E, as indicated by the dashed line. Macrocell X covers the coverage range of cells B, C, D and E. If no control is performed to the cell to which the UE pertains, the UE may be handed over to cell B from cell A, then handed over to cell C from cell B, then handed over to cell D from cell C, then handed over to cell E from cell D, then handed over to cell F from cell E. The times of the handovers are five. If the UE is handed over to macrocell X firstly, the times of the handovers during the UE moves to cell F is decreased. Thus, the system loads caused by the cell handover of UE is decreased.

A known method for handing over a terminal to a macrocell is as follows. In a know network architecture, a Radio Network Controller (RNC) is adapted to monitor a plurality of NodeBs so as to judge whether the UE moves fast according to the frequency of the cell update. When the RNC determines that the UE moves fast, the RNC hands over the UE to the macrocell. This method is mainly used for a user which moves fast.

Another reason is the Ping-Pong handover. As shown in Figure 2, the UE is in the cell coverage range of cell 1, cell 2, cell 3 and macrocell 4 and in the edge region of the cell 1, cell 2 and cell 3. The signals of these different cells are substantially the same. Thus, the Ping-Pong handover tends to occur on the UE. In other words, the UE may be handed over among cell 1, cell 2 and cell 3 frequently. The reason causing the Ping-Pong handover includes a random environment change, such as obstacle, disturbance and fading, or an inherent difference among handover thresholds or handover algorithms of NodeB from different manufactures. Currently, an existing method for processing the Ping-Pong handover mainly includes delaying a handover time so as to decrease the number of handovers.

In conventional tree-type network architecture, a concentrate RNC physical entity communicates with a plurality of base stations. Thus, the RNC obtains information of the plurality of base stations. However, in a flat network architecture such as Long Term Evolution (LTE) of access network and World Interoperability for Microwave Access (WIMAX) network, because without the RNC entity in the tree-type network architecture, it is difficult for the Radio Access Network (RAN) side to judge whether the UE is moving fast, and the RAN side is unable to hand over the UE which moves fast to the macrocell. Thus, a frequent handover is caused and a large loads are brought to the network side and even to the UE side. The system performance is affected and the macrocell cannot be efficiently used.

### Summary of the Invention

Embodiments of the present invention provide a method, a system, a terminal, an access node and a gateway for handing over a terminal to a macrocell, so as to hand over a UE with a frequently changing state to the macrocell.

An embodiment of the present invention provides a method for handing over a terminal, including:
determining, by an access node to which the terminal currently pertains, that the terminal is in a frequent handover state or a fast moving state; and
handing over the terminal to the macrocell according to the frequent handover state or the fast moving state, and a preconfigured handover criterion.

An embodiment of the present invention provides a terminal, including:
a monitoring unit, adapted to monitor a state of the terminal in a coverage range of an access node to which the terminal pertains;
a judging unit, adapted to judge whether the terminal reaches a preconfigured frequent handover or fast moving criterion according to state information of the terminal; and
a report unit, adapted to report information indicating that the terminal is in the frequent handover state or the fast moving state when the terminal reaches the preconfigured frequent handover or fast moving criterion.

Corresponding to the terminal, an embodiment of the present invention further provides an access node, including:
an information obtaining unit, adapted to obtain information of a terminal which is in a frequent handover state or a fast moving state; and
a handover unit, adapted to hand over the terminal to a macrocell according to the information of the terminal when the frequent handover state or the fast moving state reaches a preconfigured frequent handover or fast moving criterion.

Correspondingly, an embodiment of the present invention provides an access gateway corresponding to the access node, including:
a monitoring unit, adapted to monitor a state of a terminal;
a judging unit, adapted to judge whether the terminal reaches a preconfigured frequent handover or fast moving criterion according to state information of the terminal; and
a transmission unit, adapted to transmit information indicating that the terminal is in the frequent handover state or the fast moving state to an access node to which the terminal pertains when the terminal reaches the frequent handover or fast moving criterion.

An embodiment of the present invention provides a system for handing over a terminal to a macrocell, including:
a terminal, adapted to monitor a state of the terminal in a coverage range of an access node to which the terminal pertains, and report state information of the terminal which is in a frequent handover state if monitored state information of the terminal reaches a frequent handover or fast moving criterion preconfigured; and
an access node, adapted to receive the state information of the terminal which is in the frequent handover state and hand over the terminal to the macrocell according to the information of the terminal which is in the frequent handover state.

An embodiment of the present invention provides a system for handing over a terminal to a macrocell, including:
a terminal, adapted to monitor a state of the terminal in a coverage range of an access node to which the terminal pertains, and report state information of the terminal to the access node; and
the access node, adapted to receive the state information of the terminal and hand over the terminal to the macrocell if a frequent handover state or a fast moving state corresponding to the state information of the terminal reaches a frequent handover or fast moving criterion preconfigured.

An embodiment of the present invention provides a system for handing over a terminal to a macrocell, including:
an access gateway, adapted to monitor a state of the terminal in a coverage range of an access node to which the terminal pertains, and transmit information of the terminal which is in a frequent handover state or a fast moving state to an access node when monitored state information of the terminal reaches a frequent handover or fast moving criterion preconfigured;
the access node, adapted to receive the information of the terminal which is in the frequent handover state or the fast moving state and hand over the terminal to the macrocell if the frequent handover state or the fast moving state reaches a handover criterion preconfigured.

As can be seen from the above technical solutions, according to the embodiments of the present invention, when an access node to which the terminal currently pertains determines that the terminal is in a frequent handover state, the access node hands over the terminal to the macrocell if the frequent handover state reaches a preconfigured handover criterion. Thus, the loads on the network side and the UE side caused by the frequent handover of the terminal are reduced and the macrocell is efficiently used.

### Brief Description of the Drawings

Figure 1 is a diagram showing a conventional process in which the terminal moves fast;

Figure 2 is a diagram showing a conventional Ping-Pong handover of the terminal;

Figure 3 is a flow chart of the method for handing over the terminal to the macrocell according to a first embodiment of the present invention;

Figure 4 is a flow chart of the method for handing over the terminal to the macrocell according to a second embodiment of the present invention;

Figure 5 is a flow chart of the method for handing over the terminal to the macrocell according to a sixth embodiment of the present invention;

Figure 6 is a flow chart of the terminal according to a first embodiment of the present invention;

Figure 7 is a flow chart of the access node according to a first embodiment of the present invention;

Figure 8 is a flow chart of the access node according to a second embodiment of the present invention;

Figure 9 is a flow chart of the access node according to a third embodiment of the present invention;

Figure 10 is a flow chart of the system according to a first embodiment of the present invention; and

Figure 11 is a flow chart of the system according to a third embodiment of the present invention.

### Detailed Description of the Embodiments

The objects, technical solution and other advantages of the present invention will be more clearly understood from the following detailed description taken in conjunction with the accompanying drawings.

Figure 3 is a flow chart of the method for handing over a terminal to a macrocell according to a first embodiment of the present invention.

In step 301, an access node, to which the terminal currently pertains, determines that the terminal is in a frequent handover state.

The access node may monitor the state of the terminal so as to judge whether the terminal is in the frequent handover state. The access node may monitor the state of the terminal since the terminal accesses the access node. As for a terminal which moves fast, different criterions may be configured to judge whether the terminal is in a fast moving state, according to a resident time of the monitored terminal in a coverage range of the access node. For example, if the resident time is 2 minutes, it is determined that the terminal moves fast, however if the resident time is more than 2 minutes and less than 10 minutes, it is possible that the terminal moves fast and a further judgment is needed. Through an interface of the access node, the state information is transmitted to a next access node to which the terminal pertains. The next access node judges whether the terminal is in the frequent handover state, according to the previous state of the terminal and the state of the terminal in the coverage range of the next access node.

Generally, whether the terminal is in the frequent handover state cannot be affirmatively determined simply by the state information of the terminal in the coverage range of one access node. Thus, the state information of the terminal in a plurality of access nodes need a comprehensive judgment and then can be more precise. Therefore, when the next access node still cannot determine whether the terminal is frequently moving, the terminal transmits all or part of the state information of the terminal to another access node to which the terminal pertains. Thus, another access node can make a judgment more easily.

Optionally, whether the terminal is in the frequent handover state may also be determined by the terminal or the access gateway at the core network side and then whether the terminal is in the frequent handover state is transmitted to the access node.

Where, the access node may be a base station in LTE or an Access Service Network (ASN) entity in the WIMAX network, or a similar function entity in some other flat network architectures.

In step 302, if the frequent handover state reaches a preconfigured handover criterion, the terminal is handed over to the macrocell.

As can be seen from above, in the method according to an embodiment of the present invention, the access node hands over the terminal which hands over frequently to the macrocell, and thus the unnecessary processing load at the network side caused by the frequent handover of the terminal is reduced.

Figure 4 is a flow chart of the method for handing over the terminal to the macrocell according to a second embodiment of the present invention. The method includes the following steps.

In step 401, it is determined that the terminal is in a frequent handover state.

Whether the terminal is in the frequent handover state may be judged in the following manner.

The base station monitors the state of the terminal so as to judge whether the terminal is in the frequent handover state according to the change of the terminal state. Or, the terminal determines that the terminal is in the frequent handover state according to the change of the terminal state. Or, the access gate determines that the terminal is in the frequent handover state according to the frequency of the path switch of the terminal on User Plane Entity (UPE) or the location update of the terminal on Mobility Management Entity (MME). The terminal or the handover gateway transmits the determined result information to the access node to which the terminal pertains, via a judgment report message.

In step 402, if a priority of the frequent handover state of the terminal reaches a preconfigured handover criterion, the terminal is handed over to a macrocell.

The frequent handover state of the terminal may includes a plurality of grades determined according to the factor for causing a frequent handover state. Taking the fast moving as an example, the grades include a normal speed grade, a fast speed grade and a very fast speed grade. Thus, the priority for handing over the terminal to the macrocell is configured for the terminal according to the grade of the frequent handover state.

The capacity of the macrocell is not infinity. Thus, in practice, the terminal is handed over to the macrocell according to the loads of the macrocell and the priority of the terminal. When the loads of the macrocell are light, the terminal with a low priority may be handed over to the macrocell. However, when the loads of the macrocell are heavy, only the terminal with a high priority is handed over to the macrocell.

After the terminal is handed over to the macrocell, the frequent handover of the terminal may be avoided because the coverage range of the macrocell is large. Thus, processing loads on the network side are not very heavy.

Moreover, when the UE is handed over to the macrocell, if a criterion for handing over the UE back to the non-macrocell is reached, the UE is handed over to the non-macrocell.

Because the UE cannot move fast or perform the Ping-Pong handover all the time, when the criterion for handing over the UE to the macrocell is not reached, in other words, when the UE does not move fast or perform the Ping-Pong handover, the UE needs to be handed over to a normal cell, i.e., a micro-cell or a micromicro-cell in time, thus, the resources of the macrocell are saved and the user which needs to be handed over to the macrocell can be handed over to the macrocell in time.

Of course, when the UE is handed over to the macrocell, the handover between different macrocells for the user which moves fast may also be involved. The handover between the macrocells and the handover between normal cells are similar and repeated descriptions thereof are omitted herein.

Furthermore, when the UE is handed over to the macrocell, the priority of the UE is recovered to an initial state.

After the UE has been handed over to the macrocell, the priority for handing over the UE to the macrocell is recovered to the initial state. Thus, the phenomenon that the UE is handed over between the macrocell and the normal cell for the reason that the priority being still passed may be avoided.

A third embodiment of method for handing over the terminal to an macrocell according to the present invention is implemented by the access node. This embodiment takes the access node which is the evolved NodeB (eNodeB) as an example. The process of the access node which is the ASN is similar as that of the access node which is the eNodeB and repeated descriptions are omitted herein.

As shown in Figure 1, the UE moves fast in the coverage range of base station A, in other words, the UE moves fast in the access network of the cell A. Thus, the UE stays in cell A for a short time and is handed over to cell B. Because the UE stays in the coverage range of the base station A for a short time, the station A transmits information indicating that the UE is continuously handed over to the station B for judging whether the UE is in the frequent handover state. For example, the UE context may be used to transmit the information. The UE context is transmitted via an HO Request message on the X2 interface between the LTE base stations. The following information may be added into the UE context.

a) The base station ID or the cell ID relating to each handover/recent handovers/last handover may be added. In other words, the eNodeB ID list or the cell ID list may be added. In the case of the WIMAX network, the identity of the subnet base station in the ASN and the BS ID List may be added. The cell ID of recent handovers during a certain period may be added. The time period is selected based on the application circumstance.

Because the UE may be handed over to many cells in the coverage of the base station after accessing a network and the UE context should be short as far as possible, preferably, the cell information of only recent handovers is selected.

b) The stay period that the UE stays in the cell relating to each handover/recent handovers/last handover, or the stay period that the UE stays in each cell during a cell reselection process may be added into the information.

The stay period may correspond to the eNodeB ID in the eNodeB ID list respectively or correspond to the cell ID in the cell list.

With the eNodeB ID and the stay period corresponding to the eNodeB, it is judged whether the terminal moves frequently according to a preconfigured rule. For example, a preconfigured rule is that, if the stay period of the terminal in two cells are both less than 5 minutes, it can be determined that the terminal is moving fast; thus, if a terminal satisfies the preconfigured rule, it is determined that the terminal moves fast. As another example, if a terminal is handed over among several cells all the time and the stay period in each cell is not long, it can be determined that the terminal is in the Ping-Pong handover. Additionally, the number of the cells and the stay period may be configured according to practice network state.

Moreover, during the last handover, recent handovers or the cell reselection, the coverage information of the cell (such as information indicating the size of the coverage), the downlink power information (indicating the size of the cell), the antenna height, the parameter of the tower mounted amplifier, the frequency, the carrier range information and so on may be used as factors for calculating the moving speed of the UE and thus judging the frequency of the handovers.

Additionally, the transmission of the UE capacity information during the handover, such as the frequency band supported by the UE, the max uplink transmission power, the service type supported and whether the GPS function is included, may facilitate the target side to make a reasonable judgment for the handover.

Optionally, the information of c) may also be carried in addition to the information of a).

c) The change rate of the uplink signal of the terminal in the cell may be added. Particularly, the change rate of the uplink signal power and the uplink signal bit error rate may be added. Therefore, the eNodeB of the destination cell can determine the moving speed of the terminal according to the change rate.

The change rate also corresponds to the eNodeB ID in the eNodeB ID respectively.

The destination cell may determine the moving speed of the terminal and thus judge whether the terminal is in the frequent handover state, according to the eNodeB ID and the change of the uplink signal of the terminal in these cells.

Optionally, the information of d) may also be carried in addition to the information of a).

The state information of the terminal transmitted from the eNodeB to which the terminal pertains previously to the terminal of the source eNodeB may be added so as to directly indicate whether the terminal is in the frequent handover state.

The state information may also correspond to the eNodeB ID in the eNodeB ID list or correspond to the cell ID in the cell ID list.

Where, it can be configured that if two or more options are as Yes or No, for example, if three options are configured as Yes continuously, the UE is handed over to the macrocell.

The option may also be configured in accordance with the order of magnitude. Taking the factor causing the frequent handover as an example, the terminal speed may be configured as Normal, Fast, and Very Fast. For example, the UE may be handed over to the macrocell in the case that there are four continuing Normal determinations of the moving speed of the terminal or three continuing Fast or two with Very Fast. Optionally, the UE may be handed over according to any combination of the options and unnecessary descriptions are omitted herein.

Thus, the source cell may transmit UE state information to the destination cell and the base station of the destination cell may directly use the UE state information during next handover so as to judge whether to hand over the UE to a macrocell.

Additionally, if the source cell informs the UE about the Inter Cell RRM (ICR) information of neighbor cell (for example, by issuing broadcast information or dedicate message), the UE is facilitated to implement the cell reselection and the cell handover. For example, it is avoided that the UE access a cell whose downlink signal quality is high but uplink signal quality is low. The ICR information may includes: the transmission power of neighbor cell, amplification coefficient of tower mounted amplifier and the desired uplink signal power and so on.

Optionally, some accompanying information such as load of the source cell, the load of the destination cell, load of other destination cell and moving direction of the terminal, may also be carried in the UE context. Thus, more information may be provided to the destination cell to make a precise judgment.

Additionally, the terminal may judge whether the terminal in the frequent handover state according to its own state change and report the judging result to the access node to which the terminal pertains currently. The implementation of this process is as follows.

It is determined that whether the number of the cell handovers during a time period T1 goes beyond a range of (N-ho1, N-ho2) or the number of the cell reselections during a time period T2 goes beyond a range of (N-cr1, N-cr12), or the sum of the number of the handovers and the number of reselections during a time period T3 goes beyond a range of (N-h0+cr1, N-ho+cr2). Where, N represents the times of the cell reselections or handovers, ho1, ho2, cr1 and cr2 are all constants. The configuration of the parameters T1, T2, T3, N-hol/2, N-ho+cr1/2, N-cr1/2 may be implemented via a broadcast message or a dedicate message, such as a measurement control message, issued from the network side.

For example, if the times of the handovers are less than n-ho1 during T1, the state of the terminal is not determined as the frequent handover state or the fast moving state. If the times of the handovers are larger than N-ho1 during T1, the terminal is determined as a middle level frequent handover state or fast moving state. Further, if the times of the handovers are larger than N-ho2 during T1, the state of the terminal is determined as a high level frequent handover state.

The UE may transmit information indicating the frequent handover state to the source eNodeB or destination eNodeB via a dedicate message.

When the UE determines that the state is the frequent handover state, the UE may selectively modify some measurement parameters so as to meet the requirement of the cell handover/reselection. For example, the Threshold, Hysterisis, Hysterisis, Time_to_trigger (the time period for triggering a neighbor cell measurement or the time period for triggering submission by the UE of a measurement report), measurement period reporting interval and the reselection priority of cells of different frequency/RAT are modified in a certain proportion (by using one or more scaling factors).

With reference to Figure 1, in this embodiment, the information of d) is carried and two options are used.

The base station A informs the base station B that the UE moves fast in the cell A via the UE context.

Similarly, the base station B informs the base station C that the UE moves fast in the cell B via the UE context.

The base station C informs the base station D that the UE moves fast in the cell C via the UE context.

In case that the base station D knows that the UE moves fast in the cell D and also knows that the UE moves fast in cells A, B, C according to the UE context, the base station D hands over the UE to the macrocell X when the station D needs to hand over the UE to the cell E. Optionally, the base station D may directly hand over the UE to the macrocell X when the UE is known of moving fast in cell D.

Thus, when the UE moves fast to the cell F, the UE needs not to be handed over again because the UE is already handed over to the macrocell X. If the UE is not handed over to the macrocell, the UE needs to be handed over to the cell F from the cell E when the UE is handed over to the cell E. Therefore, the number of the handovers is reduced by handing over the UE to the macrocell X and the system loads are lowered. Because the UE consumes the system load for implementing the cell handover, the loads of the UE may also be reduced by handing over the UE to the macrocell in advance.

The information carried in the UE may also be used for the Ping-Pong handover of the UE. In order to avoid the inherent difference, the threshold information for the handover in the source cell may be carried in the UE context. Thus, the base station in the destination cell may use the threshold information and make a more precise judgment.

In a fourth embodiment of the present invention, the method for handing over a terminal to a macrocell is implemented by an access node and UE. Herein, the ASN in the WIMAX network is taken as an example.

In this embodiment, the UE indicates whether the macrocell is to be selected via the measurement message reported to the ASN. The UE judges whether the UE is in the frequent handover state according to the times of the handovers and the intervals of the handovers recently happened, or the UE determines that the UE moves frequently according to a frequent location update of the UE.

The UE may add the following information in the measurement report.

1) Information indicating whether the UE moves fast. A new field may be added in the UE context and the moving speed may be divided into a plurality of levels. The higher the moving speed, the higher the level it is; and the more frequent the handover, the higher the level it is.

2) Information indicating whether the UE implements a Ping-Pong handover. This information may share the same field as that of information 1). Optionally, this information may also use a new field. The frequency of the Ping-Pong handover may be divided into a plurality of levels. The larger the number of handovers, the higher the level it is.

When the ASN receives the measurement report from the UE, the ASN judges whether to hand over the UE to the macrocell according to the load of the macrocell and the level of the frequent handover state reported. This is a dynamic process. When the loads of the macrocell are relatively low, the UE with a relatively low level may be handed over to the macrocell. However, if the loads of the macrocell are relatively heavy, it is possible that the UE with a relatively high level will not be handed over to the macrocell.

In a fifth embodiment of the present invention, the method is implemented by the base station and the access node. In the fifth embodiment, the access node is eNodeB.

The UE reports the times of the handovers happened during a certain time period to the eNodeB. The eNodeB makes a judgment according to the times reported by the UE and a preconfigured rule. Further, in order to make a more precise judgment of the eNodeB, the UE may also report information indicating the interval time between handovers and indicating whether the terminal is handed over among different cells to the eNodeB. The Connection Manage Control (CMC) unit in the eNodeB makes a decision on whether to hand over the UE to the macrocell according to the information reported.

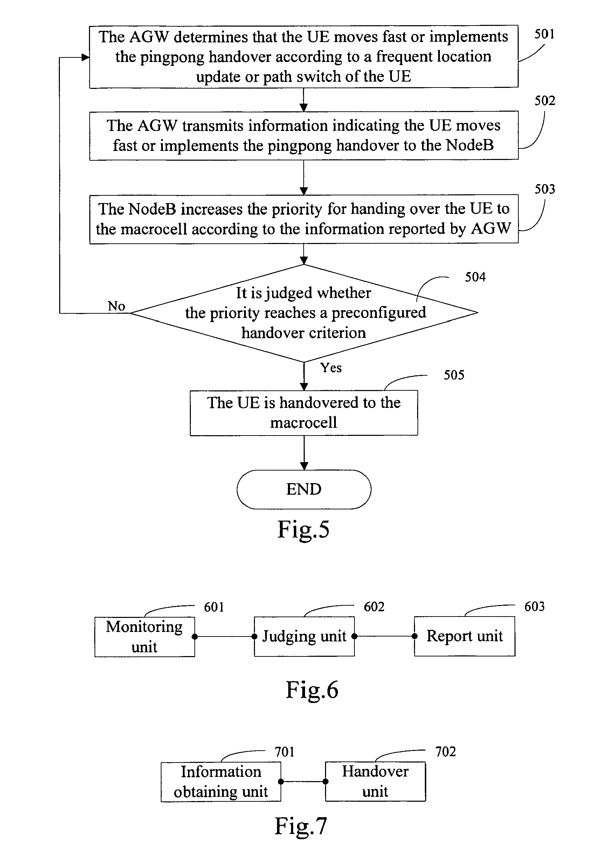

In a sixth embodiment of the present invention, the method for handing over the terminal to the macrocell is implemented by a base station and an Access Gateway (AGW). The AGW can judge whether the UE moves fast or implements a Ping-Pong handover. Each cell handover affects the AGW, where, a location update is happened on the control plane MME of the AGW and the path switch is happened on the user plane UPE, as shown in Figure 5. In this embodiment, the access node is the eNodeB. The method includes the following steps.

In step 501, the AGW determines that the UE moves fast or implements the Ping-Pong handover according to the frequent location update or path switch of the UE.

In step 502, the AGW transmits information indicating the UE moves fast or implements the Ping-Pong handover to the eNodeB.

In the prior art, the information interaction between the AGW and the eNodeB is known, but the process for transmitting the information set above is not provided. Therefore, a new message such as handover indication message needs to be added so as to instruct the eNodeB to operate. Optionally, a modification may also be performed to an existing message so that the above information is carried. During the application, the AGW implements the information interaction with the CMC unit in the eNodeB.

In step 503, the eNodeB increases the priority level of handing over the UE to the macrocell according to the information reported.

In step 504, it is judged whether the priority reaches a preconfigured handover criterion. If the priority reaches the preconfigured handover criterion, the flow proceeds to step 505, otherwise, the flow proceeds to step 501.

In step 505, the UE is handed over to the macrocell.

As can be seen, through the change on the AGW of the UE handover, the AGW can determine the state of the terminal. Thus, the terminal which is in the frequent moving state can be identified. The AGW can instruct the eNodeB to implement a corresponding process such as handing over the terminal to the macrocell. Thus, the times of the handovers at the network side are reduced.

In the above embodiments, the terminal is handed over to the macrocell in the case that the access node to which the terminal currently pertains determines that the terminal is in the frequent handover state. As for a terminal in an active state, it is judged whether the terminal is in the frequent state with reference to a factor, for example, the moving speed which causes the frequent handover of the terminal. Further, it is judged whether the terminal is to be handed over to the macrocell according to whether the terminal is in the frequent handover state. As for a terminal in an idle state, only the cell reselection is to be happened and it cannot be judged whether the terminal is in the frequent handover state. Through the moving speed of the terminal, for example, according to the change rate of the coordinate obtained through GPS, it is judged whether the terminal is in the fast moving state and then it is judged whether to hand over the terminal to the macrocell.

In the measurement configuration message which is only used for the UE or the broadcast message, the network side can instruct the UE to report the moving speed and the location information.

The moving information of the UE can be determined by the UE side through determining the change rate of the downlink signal strength or the Timing Advance (TA) in the serving cell (in the case that the UE is far away from or near the base station) or comparing the time difference between neighboring cells (in the case that the cells are synchronized).

Alternatively, the moving change rate of the UE may be calculated according to the change rate of the GPS position. The moving speed (including direction) of the UE is obtained according to the distance Dg moved in a certain period Tg, Dg/Tg.

For example, if a speed is higher than a handover criterion parameter Vg1, the speed is considered as a middle moving speed. If a speed is higher than a handover criterion parameter Vg2, the speed is considered as a high moving speed. The parameters are broadcasted to the UE via a cell broadcast message or a dedicate message (such as a measurement control message).

The UE may transmit the fast moving information obtained by above methods to the destination eNodeB or the source eNodeB through the dedicate message. If the network finds a macrocell to which the UE can be handed over, the UE is handed over to the macrocell even the UE does not have the record of many handovers previously, in other words, even a frequent handover criterion is not reached. In addition, if the user does not care the privacy, the position information (such as the GPS information) can be reported to the eNodeB directly.

In addition to providing the information indicating the moving state of the UE to the source eNodeB by the UE, the UE may also transmit the information indicating the moving speed of the UE to the destination eNodeB through handover procedure related signaling.

Additionally, when the UE determines that the UE moves fast, the UE may selectively modify some measurement parameters so as to meet the requirement of the cell handover/reselection. For example, the Threshold, Hysterisis, Time_to_trigger (the time period for triggering a neighbor cell measurement or the time period for triggering the submission by the UE of a measurement report), measurement period Reporting interval and the cell reselection priority of different frequency/RAT cells are modified in a certain proportion (by using one or more scaling factors).

Example 1: When the speed is lower than the middle level, the waiting time Time_to_trigger is T-delay (in other words, the scaling factor =1); when the speed is at the middle level, the waiting time Time_to_trigger is fifty percent of T-delay (in other words, the scaling factor =0.5); when the speed is at the high level, the waiting time Time_to_trigger is zero or ten percent of T-delay (in other words, the scaling factor =0 or 0.1), in other words, the neighbor cell measurement or the measurement report submission needs to be implemented.

Example 2: When the moving speed of the UE is less than the middle level, the priority level is sustained; when the moving speed is at the middle level, the priority of other RAT is degraded by one level; when the moving speed is at the middle level, the priority of other RAT is degraded by two levels.

Similar processes may be applied to other parameters.

Figure 6 is a flow chart of the terminal according to a first embodiment of the present invention. The terminal includes:
a monitoring unit 601, adapted to monitor a state of the terminal in a coverage range of an access node to which the terminal pertains;
a judging unit 602, adapted to judge whether the terminal reaches a frequent handover or fast moving criterion according to state information of the terminal; and
a report unit 603, adapted to report information indicating that the terminal is in the frequent handover state or the fast moving state when the terminal reaches frequent handover or fast moving criterion.

The terminal can judge whether the UE moves fast or implement the Ping-Pong handover and report a judging result to the network side. Thus the network side can process in time.

A first embodiment of the access node provided by the present invention is shown in Figure 7 and the access node mainly includes:
an information obtaining unit 701, adapted to obtain information of a terminal which is in a frequent handover state or a fast moving state; and
a handover unit 702, adapted to hand over the terminal to a macrocell according to the information of the terminal when the frequent handover state reaches a preconfigured frequent handover criterion.

The access node hands over the terminal to the macrocell after determining that the terminal is in the frequent handover state. Thus, the times of the handovers of the terminal at the network side is reduced and the processing loads at the network side are lightened.

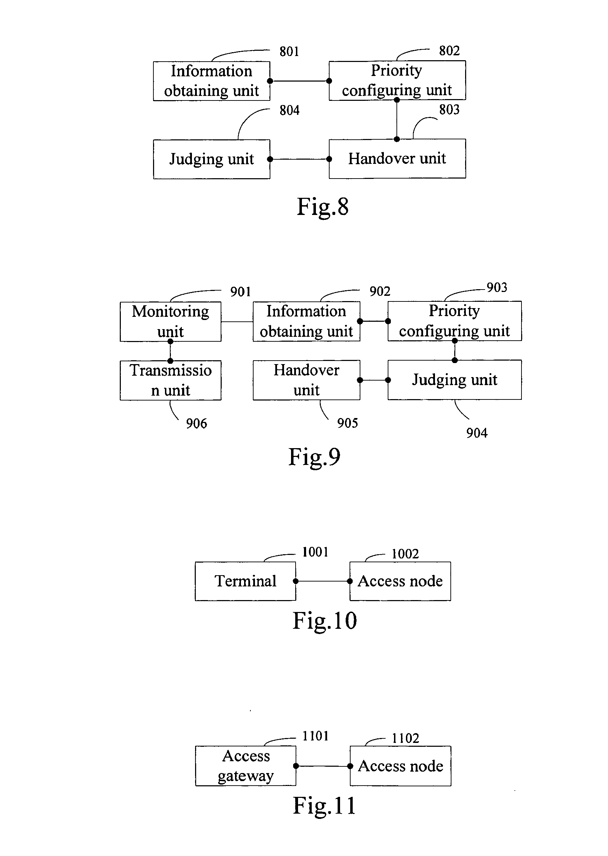

Figure 8 shows the access node according to a second embodiment of the present invention. The access node includes:
an information obtaining unit 801, adapted to obtain information of a terminal which is in a frequent handover state;
a priority configuring unit 802, adapted to configure a priority of the terminal for handing over the terminal to a macrocell;
a judging unit 803, adapted to judge whether the priority reaches a preconfigured criterion for handing over the terminal to the macrocell; and
a handover unit 804, adapted to hand over the terminal to the macrocell when the priority reaches the preconfigured criterion for handing over the terminal to the macrocell.

In this embodiment, the access node configures a priority for handing over a terminal which is in frequent handover state to the macrocell. Thus, the terminal can be handed over to the macrocell dynamically according to the loads on the macrocell. Thus, it is avoided that the macrocell is overloaded.

Figure 9 shows the access node according to a third embodiment of the present invention. The access node includes:
a monitoring unit 901, adapted to monitor a state of a terminal and send information indicating that the terminal is in a frequent handover state or a fast moving state if the terminal is in the frequent handover state or the fast moving state to an information obtaining unit;
the information obtaining unit 902, adapted to obtain the information of the terminal which is in the frequent handover or the fast moving state;
a priority configuring unit 903, adapted to configure a priority for handing over the terminal to a macrocell;
a judging unit 904, adapted to judge whether the priority reaches a criterion for handing over the terminal to the macrocell;
a handover unit 905, adapted to hand over the terminal to the macrocell when the priority reaches the criterion for handing over the terminal to the macrocell; and
a transmission unit 906, adapted to transmit state information of the terminal to a next access node to which the terminal pertains, when the terminal is not in the frequent handover state or the fast moving state.

This access node is adapted to judge whether the terminal is in the frequent handover state or the fast moving state. When it is determined that the terminal is in the frequent handover state or the fast moving state, the terminal is handed over to the macrocell. Thus, unnecessary processing loads caused by the frequent handover or fast moving of the terminal at the network side can be reduced. When it is difficult to judge whether the terminal is in the frequent handover state or the fast moving state by the access node to which the terminal pertains, the state information of the terminal is transmitted to a next access node to which the terminal pertains. Thus, the next access node may further judge whether the terminal is in the frequent handover state with reference to the state information of the terminal in the coverage range of current access node. The access node may be an eNodeB in LTE or an ASN in WIMAX.

Moreover, the present invention provides an access gateway. The access gateway includes:
an apparatus for judging whether a terminal hands over frequently, adapted to monitor a state of the terminal in a coverage range of an access node to which the terminal pertains, and judge whether monitored state information of the terminal reaches a preconfigured frequent handover or fast moving criterion; and
a transmission unit, adapted to transmit information indicating that the terminal is in the frequent handover state or the fast moving state to an access node to which the terminal pertains when the terminal reaches the preconfigured frequent handover or fast moving criterion.

The access gateway can determine that the terminal is in the frequent handover state or the fast moving state according to the frequency at which the MME performs the location update to the terminal or the frequency at which the UPR performs the path switching to the terminal.

Figure 10 shows a first embodiment of the system of the present invention. The system includes:
a terminal 1001, adapted to monitor a state of the terminal in a coverage range of an access node to which the terminal pertains, and report state information of the terminal which is in the frequent handover state or the fast moving state if monitored state information of the terminal reaches a frequent handover or fast moving criterion; and
an access node 1002, adapted to receive the state information of the terminal which is in the frequent handover state or the fast moving state and handover the terminal to the macrocell according to the information of the terminal which is in the frequent handover state.

In this embodiment, the terminal monitors its own state, judges whether the preconfigured frequent handover or fast moving criterion is reached, and reports a judging result to the access node.

A second embodiment of system according to the present invention includes:
a terminal, adapted to monitor a state of the terminal in a coverage range of an access node to which the terminal pertains, and report state information of the terminal to the access node; and
an access node, adapted to receive the state information of the terminal, and hand over the terminal to the macrocell if the information of the terminal reaches a preconfigured frequent handover criterion or fast moving criterion.

In this embodiment, the terminal reports its own state information to the access node and the access node judges whether the frequent handover criterion or the fast moving criterion is reached.

Figure 11 shows the system according to a third embodiment of the present invention. The system includes:
an access gateway 1101, adapted to monitor state information of a terminal in a coverage range of an access node to which the terminal pertains, and transmit information of the terminal which is in a frequent handover state or a fast moving state to an access node when the state information of the terminal reaches a preconfigured frequent handover or fast moving criterion; and
the access node 1102, adapted to receive the information of the terminal which is in the frequent handover state or the fast moving state and hand over the terminal to the macrocell if the frequent handover state or the fast moving state reaches a handover criterion.

As can be seen from above technical solutions according to the embodiments, in an embodiment of the present invention, when an access node to which the terminal currently pertains determines that the terminal is in the frequent handover state, the access node hands over the terminal to the macrocell if the frequent handover state reaches a preconfigured handover criterion. Thus, the loads on the network side and the UE side caused by the frequent handover of the terminal are reduced and the macrocell can be used efficiently. In another embodiment of the present invention, the access node is used to monitor the state of the UE so as to judge whether the UE is in the frequent handover state, in other words, whether the UE moves fast or implements a Ping-Pong handover. Further, a priority for handing over the UE to the macrocell is configured according to the state of the UE which moves fast or implements the Ping-Pong handover. When the priority reaches a preconfigured handover criterion, the UE is handed over to the macrocell. Thus, the number of the handovers of the UE which is in the fast moving state or in the Ping-Pong handover state is reduced and the loads on the network side and the UE caused by the frequent handover are reduced. Further, by using the technical solution of the present invention in an existing network, the data to be processed by the RNC is decreased and thus the processing loads of the RNC are lowered. Further, by handing over a UE which is in the Ping-Pong handover state to the macrocell, the communication of the UE keeps smooth and the problem such as the drop call will not occur. Further, in an embodiment of the present invention, the UE monitors its own state. Thus, the loads on the network side are reduced and the UE can be handed over to the macrocell timelier because the UE can know the change of its state more quickly and precisely. In another embodiment of the present invention, the AGW monitors the state of the user. Because the AGW records each change of UE state, the AGW can instruct the access node to hand over the UE to the macrocell. Thus, the frequent handover is avoided.

The method, system, terminal, access node and gateway for handing over a terminal to a macrocell provided by embodiments of the present invention are described in detail as above. The present invention has been illustrated and described with reference to some preferred embodiments, yet the present invention is not limited to these embodiments. Those skilled in the art should recognize that various variations and modifications can be made without departing from the scope of the present invention as defined by the accompanying claims.

## Claims

1. A method for handing over a terminal to a macrocell, comprising:
determining, by an access node to which the terminal currently pertains, that the terminal is in a frequent handover state or a fast moving state; and
handing over the terminal to the macrocell according to the frequent handover state or the fast moving state, and a preconfigured handover criterion.

2. The method for handing over a terminal to a macrocell according to claim 1, wherein, the determining, by the access node to which the terminal currently pertains, that the terminal is in the frequent handover state or the fast moving state comprises:
determining, by the access node to which the terminal currently pertains, that the terminal is in the frequent handover state or the fast moving state according to monitored state information of the terminal in a coverage range of the access node.

3. The method for handing over a terminal to a macrocell according claim 1, wherein, the determining, by the access node to which the terminal currently pertains, that the terminal is in the frequent handover state or the fast moving state comprises:
determining, by the access node to which the terminal currently pertains, that the terminal is in the frequent handover state or the fast moving state according to monitored state information of the terminal in a coverage range of the access node and information transmitted from an access node to which the terminal previously pertains to the access node to which the terminal currently pertains.

4. The method for handing over a terminal to a macrocell according to claim 3, wherein, the information transmitted from the access node to which the terminal previously pertains to the access node to which the terminal currently pertains is transmitted via a handover message between base stations.

5. The method for handing over a terminal to a macrocell according to claim 3, wherein, the information transmitted from the access node to which the terminal previously pertains to the access node to which the terminal currently pertains comprises at least one of:
state information of the terminal, load information of a cell, interference information of the cell, downlink power information, a parameter of a tower mounted amplifier, a power loss of a feed cable at an antenna and a base station, an expected minimum uplink power of the cell, frequency or carrier information, cell coverage information and terminal capacity information.

6. The method for handing over a terminal to a macrocell according to claim 5, wherein, the state information of the terminal comprises at least one of:
an identity of the access node to which the terminal previously pertains and a stay time of the terminal in a coverage range of the access node to which the terminal previously pertains, the identity of the access node to which the terminal previously pertains and a change rate of an uplink signal of the terminal in the coverage range of the access node to which the terminal previously pertains, the identity of the access node to which the terminal previously pertains, and a judging result for a terminal state by the access node to which the terminal previously pertains and coverage range information of the access node to which the terminal previously pertains.

7. The method for handing over a terminal to a macrocell according to claim 1, wherein, the determining, by the access node to which the terminal currently pertains, that the terminal is in the frequent handover state or the fast moving state comprises:
obtaining, by the access node to which the terminal currently pertains, that the terminal is in the frequent handover state or the fast moving state according to information for indicating that the terminal is in the frequent handover state or the fast moving state which is received from the terminal or an access gateway and determined by the terminal or the access gateway according to the state information of the terminal in the coverage range of at least one access node.

8. The method for handing over a terminal to a macrocell according to claim 7, wherein, the information for indicating that the terminal is in the frequent handover state or the fast moving state which is received from the terminal is transmitted via a measurement report message by the terminal.

9. The method for handing over a terminal to a macrocell according to claim 7, further comprising:
making, by the terminal, an adaptive adjustment to a measurement parameter according to the information for indicating that the terminal is in the frequent handover state or the fast moving state which is determined by the terminal.

10. The method for handing over a terminal to a macrocell according to claim 7, wherein, the determining, by the access gateway, that the terminal is in the frequent handover state or the fast moving state according to the state information of the terminal in the coverage range of at least one access node comprises:
determining, by the access gateway, that the terminal is in the frequent handover state or the fast moving state according to a frequency at which a mobility management entity performs a location update to the terminal; or
determining, by the access gateway, that the terminal is in the frequent handover state or the fast moving state according to a frequency at which a user plane entity performs a path switching to the terminal.

11. The method for handing over a terminal to a macrocell according to claim 1, wherein, the preconfigured handover criterion comprises:
handing over the terminal to the macrocell when it is determined that the terminal is in the frequent handover state or the fast moving state, or handing over the terminal to the macrocell when the frequent handover state or the fast moving state reaches a handover priority which is configured by a system in accordance with possible frequent handover states or fast moving states in the system.

12. The method for handing over a terminal to a macrocell according to claim 1, further comprising:
transmitting, by the access node to which the terminal currently pertains, information for indicating that the terminal is in the frequent handover state or the fast moving state to the macrocell.

13. A terminal, comprising:
a monitoring unit, adapted to monitor a state of the terminal in a coverage range of an access node to which the terminal pertains;
a judging unit, adapted to judge whether the terminal reaches a preconfigured frequent handover or fast moving criterion according to state information of the terminal; and
a report unit, adapted to report information indicating that the terminal is in the frequent handover state or the fast moving state when the terminal reaches the preconfigured frequent handover or fast moving criterion.

14. An access node, comprising:
an information obtaining unit, adapted to obtain information of a terminal which is in a frequent handover state or a fast moving state; and
a handover unit, adapted to hand over the terminal to a macrocell according to the information of the terminal when the frequent handover state or the fast moving state reaches a preconfigured frequent handover or fast moving criterion.

15. The access node according to claim 14, further comprising:
a priority configuring unit, adapted to configure a priority for handing over the terminal in the frequent handover state or the fast moving state to the macrocell; and
a judging unit, adapted to judge whether the priority reaches a handover criterion preconfigured, and trigger the handover unit to hand over the terminal to the macrocell if the handover criterion is reached.

16. The access node according to claim 13 or 14, further comprising:
a monitoring unit, adapted to monitor a state of the terminal and send information indicating that the terminal is in the frequent handover state or the fast moving state if the terminal is in the frequent handover state or the fast moving state to the information obtaining unit; and
a transmission unit, adapted to transmit the state information of the terminal to a next access node to which the terminal pertains when the terminal is not in the frequent handover state or the fast moving state.

17. An access gateway, comprising:
a monitoring unit, adapted to monitor a state of a terminal;
a judging unit, adapted to judge whether the terminal reaches a preconfigured frequent handover or fast moving criterion according to state information of the terminal; and
a transmission unit, adapted to transmit information indicating that the terminal is in the frequent handover state or the fast moving state to an access node to which the terminal pertains when the terminal reaches the frequent handover or fast moving criterion.

18. A system for handing over a terminal to a macrocell, comprising the terminal and an access node, wherein,
the terminal is adapted to monitor a state of the terminal in a coverage range of an access node to which the terminal pertains, and report state information of the terminal, which is in the frequent handover state if monitored state information of the terminal reaches a frequent handover or fast moving criterion preconfigured; and
the access node is adapted to receive the state information of the terminal, which is in the frequent handover state and hand over the terminal to the macrocell according to the information of the terminal which is in the frequent handover state.

19. A system for handing over a terminal to a macrocell, comprising the terminal and an access node, wherein,
the terminal is adapted to monitor a state of the terminal in a coverage range of an access node to which the terminal pertains, and report state information of the terminal to the access node; and
the access node is adapted to receive the state information of the terminal and hand over the terminal to the macrocell if a frequent handover state or a fast moving state corresponding to the state information of the terminal reaches a frequent handover or fast moving criterion preconfigured.

20. A system for handing over a terminal to a macrocell, comprising an access gateway and an access node, wherein,
the access gateway is adapted to monitor a state of the terminal in a coverage range of an access node to which the terminal pertains, and transmit information of the terminal
which is in a frequent handover state or a fast moving state to an access node when monitored state information of the terminal reaches a frequent handover or fast moving criterion preconfigured; and
the access node is adapted to receive the information of the terminal which is in the frequent handover state or the fast moving state and hand over the terminal to the macrocell if the frequent handover state or the fast moving state reaches a handover criterion preconfigured.
